# EUROPÄISCHE PATENTSCHRIFT

(11) **EP 0 680 861 B1**
(45) Veröffentlichungstag und Bekanntmachung des Hinweises auf die Patenterteilung: **24.10.2001**
(21) Anmeldenummer: 95106700.8
(22) Anmeldetag: 04.05.1995
(51) Int. Cl.: B60S 3/04

(54) **Verfahren zum Waschen von Fahrzeugen und Fahrzeugwaschanlage**
Method for cleaning of vehicles and car wash installation
Procédé de lavage de véhicules et installation de lavage de véhicules

(30) Priorität: 04.05.1994 DE 4415520
(43) Veröffentlichungstag der Anmeldung: 08.11.1995
(73) Patentinhaber: Alfred Kärcher GmbH & Co., 71364 Winnenden (DE)
(72) Erfinder: Seibusch, Wilhelm, D-81377 München (DE); Wagner, Frank, Dipl.-Wirt.-Ing., D-86153 Augsburg (DE)
(74) Vertreter: Hoeger, Stellrecht & Partner

(56) Entgegenhaltungen:
- DE-A- 3 728 430
- DE-C- 3 837 928

## Beschreibung

Die Erfindung betrifft eine Fahrzeugwaschanlage mit einer Wascheinrichtung, einer Abwasserentsorgung für in der Wascheinrichtung auf ein zu reinigendes Fahrzeug aufbringbare Waschflüssigkeit, und mit einer mindestens ein mechanisches Polierelement aufweisenden Poliereinrichtung.

In der DE 38 37 928 C1 ist eine Fahrzeug-Wasch-, Polier- oder Trocknungsvorrichtung beschrieben, welche ein Fahrzeug nach dem Waschen dadurch trocknet, daß streifenförmige Lappen an der Fahrzeugoberfläche entlanggleiten und anhaftende Flüssigkeit wegpolieren. Dieses Polieren ist im wesentlichen lediglich ein Abstreifvorgang, bei dem die Fahrzeugoberfläche nicht in gewünschter Weise einen dauerhaften Poliermittelüberzug erhält.

Die in der Praxis bekannten mechanischen Fahrzeugwaschanlagen besitzen eine Wascheinrichtung, die portalgebundene Waschelemente und Spülelemente aufweist. Die Waschelemente bestehen z.B. aus Waschbürsten oder Hochdruck-Sprühbalken, die das Fahrzeug nur mit Wasserstrahlen und einem chemischen Waschmittel reinigen. Der Wascheinrichtung ist in der Praxis eine Konservierungseinrichtung und eine Trockeneinrichtung nachgeschaltet. In der Konservierungseinrichtung werden auf die Fahrzeugoberfläche ein Wachs-Polish-Präparat, ein Heißwachs oder dergleichen andere Konservierungsstoffe aufgetragen, die einen haftenden Film auf der Fahrzeugoberfläche bilden sollen, der anschließend nur noch getrocknet wird. Der Auftrag erfolgt meist durch Sprühen oder im Schwall mit reichlich Trägerwasser und in solcher Übermenge, daß ein Großteil der Konservierungsstoffe am Fahrzeug abläuft und ins Abwasser gelangt. Das wirft Probleme mit dem Abwasser auf, weil die Konservierungsstoffe nur durch besondere Maßnahmen abgeschieden werden können. Dies ist aufwendig, weil für die Konservierungsstoffe eine eigene Abwasserentsorgung vorhanden ist, die außerdem spezielle Zusatzeinrichtungen für die Ausfällung der Inhaltsstoffe erfordert. Nachteilig ist ferner, daß die Fahrzeuge trotz Konservierungsmittel und Trocknung beim Verlassen der Fahrzeugwaschanlage nicht immer ein optimales Finish aufweisen.

Eine Poliereinrichtung für Kraftfahrzeuge ist schließlich in der WO 95/18732 beschrieben. Diese Vorrichtung dient ausschließlich dem Polieren, zum Polieren soll ein Autowachs auf die zu polierende Oberfläche aufgebracht werden. Es ist aber nicht angegeben, wie dies im einzelnen zu erfolgen hat.

Ausgehend von bekannten gattungsgemäßen Fahrzeugwaschanlagen liegt der Erfindung die Aufgabe zugrunde, eine solche Fahrzeugwaschanlage so auszubilden, daß mit ihr die Fahrzeugoberfläche für den Einsatz der Poliereinrichtung günstig vorbereitet und dabei gleichzeitig eine Verschmutzung der Umwelt vermieden werden kann.

Diese Aufgabe wird durch eine Fahrzeugwaschanlage der eingangs beschriebenen Art gelöst, die dadurch gekennzeichnet ist, daß eine Auftragsvorrichtung für ein Poliermittel vorgesehen ist, welche derart steuerbar ist, daß das Poliermittel in konzentrierter Form in einer Menge gezielt so auf die Fahrzeugoberfläche aufgebracht wird, daß ein weitgehend abtropffreier Poliermittelauftrag erfolgt und die Poliereinrichtung das auf die Fahrzeugoberfläche aufgetragene Poliermittel auf dieser vollständig verteilt und in diese einarbeitet.

Die Fahrzeugwaschanlage weist eine Abwasserentsorgung auf, die das Abwasser gereinigt oder ungereinigt in den Kanal entläßt oder das Abwasser aufbereitet und im Kreislauf den Behandlungsaggregaten der Fahrzeugwaschanlage wieder zuführt. Durch die integrierte Poliereinrichtung und den Wegfall der Konservierungseinrichtung ist es möglich, die Abwasserentsorgung zu vereinfachen und nur auf das Wasch- bzw. Spülwasser und die darin enthaltenen Substanzen auszulegen. Die früheren Probleme mit Konservierungsmitteln sind nicht mehr gegeben.

Die Auftragsvorrichtung mit dem auf den Bedarf begrenzten Mengenauftrag des Poliermittels hilft die Abwasserprobleme noch weiter zu verringern. An der Poliereinrichtung entstehen keine wesentlichen Rückstände, die entsorgt werden müßten. Von daher ist es möglich, die Abwasserentsorgung größenmäßig zu begrenzen und nur im Bereich der Wascheinrichtung vorzusehen. Im Bereich der Poliereinrichtung brauchen keine Organe der Abwasserentsorgung vorhanden zu sein.

Die Abwasserentsorgung erfordert einen geringeren Bauaufwand und verfahrenstechnischen Aufwand als vorbekannte Anlagen. Bei Fahrzeugwaschanlagen mit örtlicher Trennung der Wasch- und Poliereinrichtung kann durch den Verzicht auf eine Abwassersammlung und -entsorgung im Bereich der Poliereinrichtung der Bauaufwand noch weiter verringert werden.

Durch die bessere Umweltverträglichkeit sind die behördlichen Auflagen leichter zu erfüllen, wobei die erfindungsgemäße Fahrzeugwaschanlage auch in Gebieten installiert werden kann, in denen konventionelle Anlagen Genehmigungsprobleme haben können.

Das Polierverfahren bzw. die Poliereinrichtung arbeiten mit mechanischen Polierelementen, die das aufgetragene Poliermittel auf der Fahrzeugkarosserie verteilen und mechanisch einarbeiten. Das Poliermittel wird in konzentrierter Form von einer geeigneten steuerbaren Auftragsvorrichtung auf das Fahrzeug aufgetragen. Im Gegensatz zu den vorbekannten Konservierungsanlagen ist bei der erfindungsgemäßen Poliereinrichtung ein mengenmäßig begrenzter Auftrag möglich.

Bei einer bevorzugten Ausführungsform ist die Auftragsvorrichtung als Sprühvorrichtung ausgebildet, diese kann das Poliermittel gezielt und gleichmäßig auf der Karosserieoberfläche verteilen.

Zwischen der Wascheinrichtung und der Poliereinrichtung kann eine beliebig ausgebildete Trockeneinrichtung angeordnet sein. In der einfachsten Ausführungsform kann es sich um eine Abtropfstrecke handeln. Eventuell ist eine geeignete Spülung vorzuschalten, z.B. eine Spülung mit Osmose-Wasser oder eine konventionelle Spülung mit Beigabe von chemischen Trockenhilfen, die sich zusammen mit dem Waschwasser problemlos entsorgen lassen.

Es empfiehlt sich, die Poliereinrichtung in mindestens einem eigenen Portal anzuorden. Die mechanischen Polierelemente können unterschiedlich ausgebildet sein. In der bevorzugten Ausführungsform handelt es sich um textile Polierstreifenbürsten, die vorzugsweise in einer Anordnung mit mindestens einer Dachbürste und mindestens zwei Seitenbürsten vorhanden sind. Alternativ können die Polierelemente auch aus einem beweglichen Streifenvorhang oder dergleichen bestehen.

Die erfindungsgemäße Fahrzeugwaschanlage kann in beliebiger Weise als Fahrzeugwaschstraße, Mehrportalanlage, inbesondere Doppelportalanlage oder dergleichen ausgebildet sein. Eine Mehrportalanlage kann z.B. als Taktanlage mit Portalen in getrennten Räumen oder als platzsparende Tandemanlage ausgebildet sein. Eine besondere Platzersparnis in Verbindung mit einer hohen Mobilität wird mit einer Kompaktanlage in Containerbauweise erreicht. In den Unteransprüchen sind weitere vorteilhafte Ausgestaltungen der Erfindung angegeben.

Die Erfindung ist in der Zeichnung beispielsweise und schematisch dargestellt. Im Einzelnen zeigen
- Figur 1:: eine Fahrzeugwaschanlage als Tandemanlage mit einer Wasch- und einer Poliereinrichtung,
- Figur 2:: eine Fahrzeugwaschanlage als Taktanlage,
- Figur 3:: eine Fahrzeugwaschanlage als Kompaktanlage im Container und
- Figur 4:: eine Fahrzeugwaschanlage als Waschstraße.

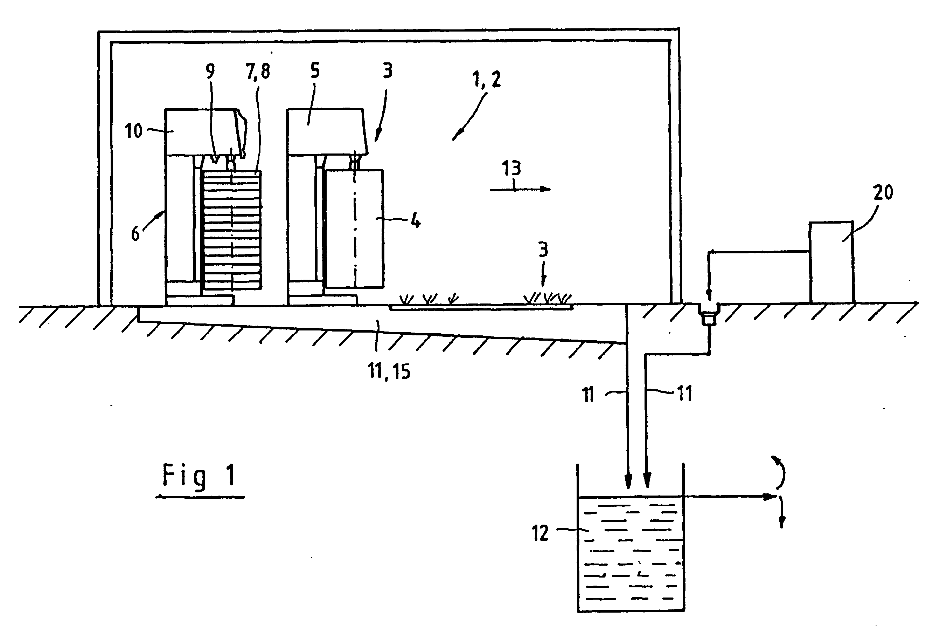

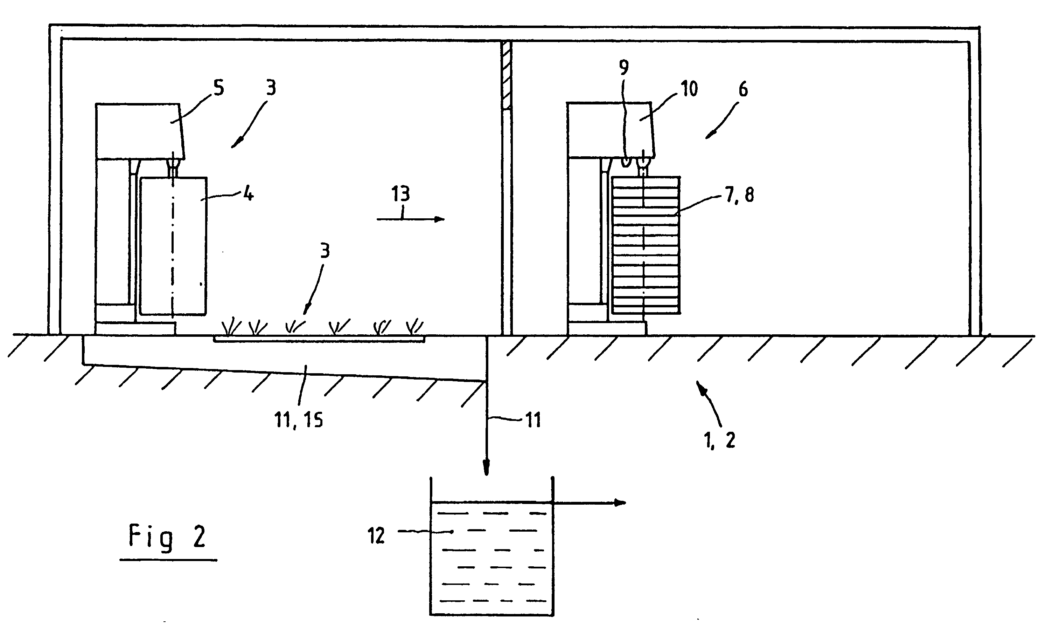

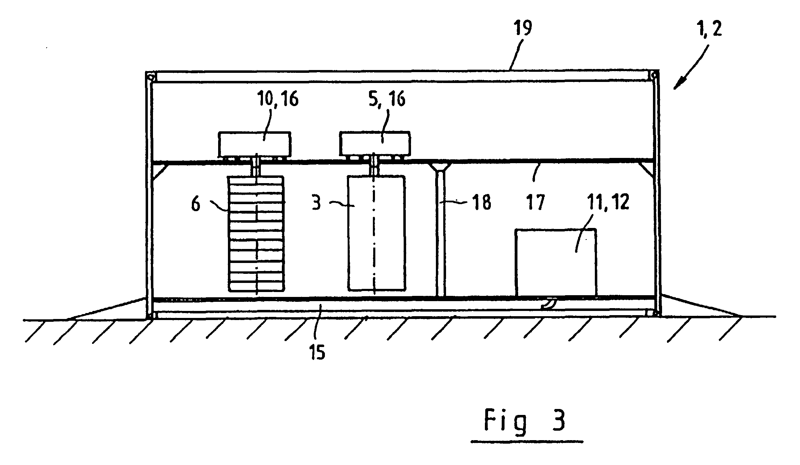

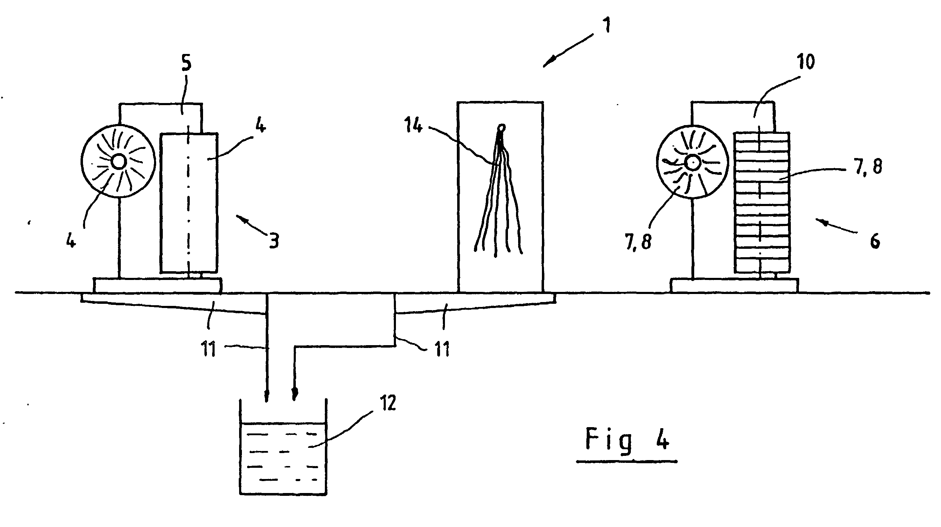

In den Zeichnungen ist eine Fahrzeugwaschanlage (1) in verschiedenen Bauweisen dargestellt. Fig. 4 zeigt eine Waschstraße, bei der die Fahrzeuge durch die Anlage geschleppt werden. Fig. 1 bis 3 zeigen sogenannte Mehrportalanlagen (2) mit vorzugsweise zwei, unter Umständen aber auch mehr Portalen. Hierbei handelt es sich in Fig. 2 um eine Taktanlage und in Fig. 1 und 3 um Tandem-Anlagen.

Bei der gezeigten Tandem-Anlage von Fig. 1 und 3 sind zwei Portale (5,10) hintereinander im gleichen Raum angeordnet und bewegen sich gegenüber dem stehenden Fahrzeug. Die beiden Portale (5,10) können dabei getrennt oder durch eine mechanische bzw. elektrische Verbindung gekoppelt miteinander verfahren werden. Bei der Taktanlage von Fig. 2 sind die beiden Portale (5,10) ähnlich ausgebildet, dabei aber in zwei getrennten Räumen hintereinander angeordnet. Das Fahrzeug wird im ersten Raum stehend vom ersten Portal (5) behandelt und dann für den zweiten Behandlungsvorgang in den nächsten Raum und zum zweiten Portal (10) gefahren oder geschleppt.

Die Fahrzeugwaschanlage (1) besitzt in den verschiedenen Ausführungsformen eine geeignete Wascheinrichtung (3), die in beliebiger und geeigneter Weise unterschiedlich ausgebildet sein kann. Im gezeigten Ausführungsbeispiel handelt es sich um ein Waschportal mit mehreren Waschbürsten (4). Vorzugsweise sind eine Dachbürste und zwei Seitenbürsten vorhanden. Es kann sich um Waschbürsten mit Textilstreifen bzw. Textillappen oder mit Bürstenhaaren oder um eine Kombination der vorgenannten Elemente handeln.

In der Wascheinrichtung (3) ist eine geeignete Auftragsvorrichtung (nicht dargestellt) für die benötigten Waschmittel und für Wasser vorhanden. Die üblicherweise mit Düsen bestückte Auftragsvorrichtung kann auch Schaum versprühen. Darüberhinaus kann auch eine geeignete Spüleinrichtung vorhanden sein, mit der nach dem mechanischen Waschvorgang die Waschmittelrückstände von der Fahrzeugkarosserie abgespült werden.

Die Fahrzeugwaschanlage (1) verfügt außer der Wascheinrichtung (3) noch über eine integrierte Poliereinrichtung (6), die in dem zweiten Portal (10) angeordnet ist. Die Poliereinrichtung (6) ist im Bearbeitungsprozeß der Wascheinrichtung (3) nachgeordnet. Je nach Gestaltung der Fahrzeugwaschanlage ist sie auch der Wascheinrichtung (3) räumlich nachgeordnet. Bei der Fahrzeugwaschstraße von Fig. 4 steht z.B. das Polierportal (10) in Schlepprichtung der Fahrzeuge hinter der Wascheinrichtung (3). Die gleiche Anordnung ist in der Taktanlage von Fig. 3 gezeigt.

Bei den Tandemanlagen von Fig. 1 und 3 nehmen die beiden Portale (5,10) ihre Ausgangs- oder Ruhestellung auf der linken Seite ein und bewegen sich für den Behandlungsprozeß in der angegebenen Fahrtrichtung (13) nach rechts. In diesem Fall beherbergt das rechte Portal (5) die Wascheinrichtung (3) und das linke Portal (10) die Poliereinrichtung (6).

In den dargestellten Ausführungsbeispielen ersetzt jeweils die Poliereinrichtung (6) die bei konventionellen Anlagen bisher übliche Konservierungseinrichtung, welche ersatzlos wegfällt. Das Fahrzeug wird nach dem Wasch- und Spülvorgang poliert, wobei noch eine Trocknung zwischengeschaltet werden kann.

Die Trocknung kann mechanisch durch Ventilatoren, Trockenvorhänge oder dgl. stattfinden. Fig. 4 zeigt am Beispiel der Fahrzeugwaschstraße die Anordnung einer Trockeneinrichtung (14), z.B. eines Tuchtrockners, zwischen Waschportal (5) und Polierportal (10).

Es kann aber auch eine Spülung mit Osmosewasser oder dgl. vorgenommen werden, wobei die Trocknung in einer Abtropfstrecke oder einer Abtropfpause besteht, bei der das Spülwasser Gelegenheit zum weitgehend rückstandsfreien Ablaufen hat. Dabei werden auch Kalkrändern und dgl. vermieden. Gegebenenfalls findet zuerst ein Spülen mit normalem Brauchwasser und danach die Osmosewasser-Spülung statt. Dazwischen kann mit einem Abstreifer ein Teil des Brauchspülwassers entfernt werden, um Osmosewasser zu sparen.

Die Poliereinrichtung (6) weist mehrere mechanische Polierelemente (7) und eine vorzugsweise steuerbare Auftragsvorrichtung (9) für ein geeignetes Poliermittel auf. Als Poliermittel im Sinne der Erfindung werden alle Chemikalien verstanden, die für Glanz sorgen und einer mechanischen Einarbeitung in die Fahrzeugoberfläche zugänglich sind oder bedürfen. Konservierungsmittel sind im Gegensatz dazu Filmbildner, die auf der Fahrzeugoberfläche eine schützende Hülle bilden. Vorzugsweise kommen bei der Erfindung klassische Poliermittel zum Einsatz, die abrasive Elemente bzw. Schleifpartikel in ausreichender Menge beinhalten. Das Poliermittel kann in unterschiedlicher Konsistenz als Flüssigkeit, Wachs, Schaum oder dgl. vorliegen. Es kann sich auch um ein sog. Glanzmittel handeln.

Das Poliermittel wird auf die Fahrzeugkarosserie mengenmäßig begrenzt aufgetragen und anschließend mit den mechanischen Polierelementen (7) verteilt und in die Karosserieoberfläche eingearbeitet. Dieser Vorgang, insbesondere die mechanische Einarbeitung kann mehrmals geschehen. Er kann von Hand oder vorzugsweise maschinell erfolgen. Die Auftragsvorrichtung (9) ist als Sprühvorrichtung ausgebildet, die das Poliermittel in konzentrierter Form aufträgt. Die Sprühvorrichtung erzeugt vorzugsweise einen feinverteilten Sprühnebel, der gleichmäßig über das Fahrzeug gezogen wird. Das Poliermittel kann aber auch in einem intermittierenden Auftrag in Streifenform appliziert werden.

Die Auftragsvorrichtung (9) begrenzt die Menge des aufgetragenen Poliermittels. Es wird nur gerade so viel Poliermittel abgegeben, wie für die Politur der jeweiligen Auftragsvorrichtung (9) kann hierzu eine geeignete Steuerung aufweisen, die die abgegebene Poliermittelmenge dosiert und vorzugsweise nach der Fahrzeuggröße und eventuell auch nach der Form steuert. Dazu können Lichtschranken oder andere geeignete Sensoren vorhanden sein, mit denen die Abmessungen, insbesondere die Länge und/oder die Kontur des Fahrzeuges festgestellt werden kann.

In einer vereinfachten Ausführungsform kann auf einen Poliermittelauftrag und eventuell auch auf die Auftragsvorrichtung verzichtet werden, insbesondere wenn eine Osmosewasserspülung eingesetzt wird. Die mechanischen Polierelemente (7) erzeugen u.U. auch ohne Poliermittel auf der Fahrzeugoberfläche, insbesondere einer osmosegespülten Oberfläche, Glanz.

Die Polierelemente (7) bestehen vorzugsweise aus Polierbürsten (8), die mit Textilstreifen oder Textillappen bestückt sind. Vorzugsweise sind mindestens eine Dachbürste und mindestens zwei Seitenbürsten vorhanden. Die Auftragsvorrichtung (9) ist mit einem geeigneten Reservoir des Poliermittels verbunden. Über die Auftragsvorrichtung (9) können auch Hilfsstoffe, wie z.B. Wasser oder dergleichen vor oder während des Polierprozesses auf das Fahrzeug aufgetragen werden.

In der Fahrzeugwaschanlage (1) können weitere Wascheinrichtungen (3), z.B. die in der Zeichnung dargestellte Unterbodenwaschanlage, eine Felgenwaschanlage, eine zusätzliche Hochdruck-Wascheinrichtung mit horizontalen und vertikalen seitlichen Sprühbalken oder dgl. angeordnet sein. Die Hochdruck-Wascheinrichtung kann auch die gezeigte Bürsteneinrichtung ersetzen.

Das während des Waschprozesses oder beim nachfolgenden Spülen ablaufende Waschwasser wird am Boden der Fahrzeugwaschanlage (1) gesammelt und einer Abwasserentsorgung (11) zugeführt. Die Abwasserentsorgung (11) kann das Abwasser wieder aufbereiten und dem Wasch- bzw. Polierprozeß erneut zuführen oder wie im gezeigten Ausführungsbeispiel in den Kanal abgeben. In die Abwasserentsorgung (11) ist hierzu eine geeignete Abscheideeinrichtung (12) integriert, die relativ einfach ausgebildet sein kann und z.B. aus einem Benzinabscheider, einem Schlammfang und eventuell einem Kiesfilter oder dgl. besteht.

Die Abwasserentsorgung (11) und die Abscheideeinrichtung (12) sind auf die Reinigung des Wasch- bzw. Spülwassers ausgelegt. Durch den Verzicht auf Konservierungsstoffe sind besondere Abscheideeinrichtungen mit Flockung, Koaleszenzabscheidung, Sedimentation etc. entbehrlich. Die Abwasserentsorgung (11) und die Abscheideeinrichtung (12) sind dadurch weniger bauaufwendig und benötigen weniger Platz.

Bei der in Fig. 3 gezeigten Taktanlage mit zwei Portalen (5,10) in getrennten Räumen befindet sich die Wascheinrichtung (3) im ersten Portal (5) und die Poliereinrichtung (6) im nachgeordneten zweiten Portal (10). Eine Abwasserentsorgung (11) braucht in diesem Fall nur im ersten Raum bei der Wascheinrichtung (3) vorhanden zu sein. Im Bereich der Poliereinrichtung (6) kann auf eine Abwasserentsorgung verzichtet werden. Ähnliches gilt auch bei der Autowaschstraße in Fig. 4.

Es kann allerdings im Bereich der Trockeneinrichtung (14) noch eine Sammelstelle im Boden für die Spülwasserreste vorhanden sein, die mit der Abwasserentsorgung (11) der Wascheinrichtung (3) in Verbindung steht. Bei der Taktanlage von Fig. 3 ist es alternativ auch möglich, die Spülung an der Poliereinrichtung (6) vorzunehmen und das Abwasser aufzufangen und der Abwasserentsorgung (11) zuzuleiten. In die Abwasserentsorgung (11) kann ferner noch der Ablauf eines Dampfstrahlers (20) oder dgl. für die manuelle oder maschinelle Vorwäsche an der Fahrzeugwaschanlage (1) münden.

Bei der Waschstraße in Fig. 4 können die Portale (5,10) und die Trockeneinrichtung (14) verfahrbar oder fest angeordnet sein. Die Wasch-, Trocken- und Poliereinrichtung (3,14,6) können zudem mehrständig ausgebildet sein, so daß die Behandlungsvorgänge in zwei oder mehr Stationen wiederholt werden. Dies ist z.B. bei der Poliereinrichtung (6) nützlich, um die Taktzeiten anzupassen und für die Fahrzeugwaschanlage insgesamt niedrig zu halten. Die Wasch- und Polierelemente (4,7,8) können auch auf mehrere Einzelportale aufgeteilt sein.

Fig. 3 zeigt eine Bauvariante der vorbeschriebenen Tandem-Anlage als Kompaktanlage, die in einem transportablen Container (19) untergebracht ist. Die Kompaktanlage ist autark und benötigt nur externe Anschlüsse für Frischwasser und Strom sowie eventuell einen Kanalanschluß für das Abwasser. Sie kann temporär an Orten mit hohem Waschbedarf oder Kundenandrang aufgestellt und dann wieder entfernt werden.

Der Container weist einen Doppelboden (15) auf, in dem das Abwasser gesammelt werden kann. Hier können sich auch Tanks für die verschiedenen Brauchflüssigkeiten befinden. Die mechanischen Aggregate der Abwasserentsorgung (11), z.B. Pumpen, Filter, Schlammfang etc. sind vorzugsweise über dem Doppelboden (15) und in den Seitenwänden des Containers (19) untergebracht. Sie stehen mit dem Doppelboden (15) in Verbindung.

Für die erfindungsgemäße Fahrzeugwaschanlage (1) mit integrierter Poliereinrichtung (6) ist es günstig, die Wasch- und Polierportale (5,10) als Hängeportale (16) auszubilden, die an aufgeständerten (18) Schienen (17) laufen. Der Platzbedarf wird dadurch verringert, was sich insbesondere bei der Kompaktanlage von Fig. 3, aber auch bei den anderen Ausführungsformen positiv bemerkbar macht. Zudem lassen sich die Spurweiten der Schienen (17) und Portale (5,10,16) leichter verändern, was einen Austausch oder eine Umrüstung der Portale bei Produktwechsel etc. vereinfacht. Hängeportale sind durch den Wegfall der Bodenschienen auch für die Abwasserentsorgung günstig.

### BEZUGSZEICHENLISTE

- 1: Fahrzeugwaschanlage
- 2: Mehrportalanlage
- 3: Wascheinrichtung
- 4: Waschbürste
- 5: Portal
- 6: Poliereinrichtung
- 7: Polierelement
- 8: Polierbürste
- 9: Auftragsvorrichtung
- 10: Portal
- 11: Abwasserentsorgung
- 12: Abscheideenrichtung
- 13: Fahrtrichtung
- 14: Trockeneinrichtung
- 15: Doppelboden
- 16: Hängeportal
- 17: Schiene
- 18: Ständer
- 19: Container
- 20: Dampfstrahler Vorwäsche

## Patentansprüche

1. Fahrzeugwaschanlage mit einer Wascheinrichtung (3), einer Abwasserentsorgung (11) für in der Wascheinrichtung (3) auf ein zu reinigendes Fahrzeug aufbringbare Waschflüssigkeit, und mit einer mindestens ein mechanisches Polierelement (7) aufweisenden Poliereinrichtung (6), **dadurch gekennzeichnet, daß** eine Auftragsvorrichtung (9) für ein Poliermittel vorgesehen ist, welche derart steuerbar ist, daß das Poliermittel in konzentrierter Form in einer Menge gezielt so auf die Fahrzeugoberfläche aufgebracht wird, daß ein weitgehend abtropffreier Poliermittelauftrag erfolgt und die Poliereinrichtung (6) das auf die Fahrzeugoberfläche aufgetragene Poliermittel auf dieser vollständig verteilt und in diese einarbeitet.

2. Fahrzeugwaschanlage nach Anspruch 1, **dadurch gekennzeichnet, daß** die Auftragsvorrichtung (9) als Sprühvorrichtung ausgebildet ist.

3. Fahrzeugwaschanlage nach Anspruch 1 oder 2, **dadurch gekennzeichnet, daß** die Abwasserentsorgung (11) nur im Bereich der Wascheinrichtung (3) angeordnet ist.

4. Fahrzeugwaschanlage nach einem der voranstehenden Ansprüche, **dadurch gekennzeichnet, daß** zwischen der Wascheinrichtung (3) und der Poliereinrichtung (6) eine Trockeneinrichtung (14) angeordnet oder geschaltet ist.

5. Fahrzeugwaschanlage nach einem der voranstehenden Ansprüche, **dadurch gekennzeichnet, daß** eine Auftragsvorrichtung für Osmosewasser vorgesehen ist.

6. Fahrzeugwaschanlage nach einem der voranstehenden Ansprüche, **dadurch gekennzeichnet, daß** die Poliereinrichtung (6) in einem oder mehreren eigenständigen Portal(en) (10) angeordnet ist.

7. Fahrzeugwaschanlage nach einem der voranstehenden Ansprüche, **dadurch gekennzeichnet, daß** die Fahrzeugwaschanlage (1) als Waschstraße oder als Mehrportalanlage, insbesondere Doppelportalanlage (2) ausgebildet ist.

8. Fahrzeugwaschanlage nach Anspruch 7, **dadurch gekennzeichnet, daß** bei einer Mehrportalanlage (2) die Poliereinrichtung (6) im zweiten und eventuell weiteren Portalen (10) angeordnet ist.

9. Fahrzeugwaschanlage nach einem der voranstehenden Ansprüche, **dadurch gekennzeichnet, daß** das Polierelement (7) als textile Polierbürste (8) ausgebildet ist.

10. Fahrzeugwaschanlage nach einem der voranstehenden Ansprüche, **dadurch gekennzeichnet, daß** die Portale als Hängeportale (16) ausgebildet sind, die auf aufgeständerten (18) Schienen (17) verfahrbar sind.

11. Fahrzeugwaschanlage nach einem der voranstehenden Ansprüche, **dadurch gekennzeichnet, daß** die Fahrzeugwaschanlage (1) als Kompaktanlage in einem transportablen Container (19) angeordnet ist.

12. Fahrzeugwaschanlage nach Anspruch 11, **dadurch gekennzeichnet, daß** ein Doppelboden (15) für die Aufnahme des Abwassers vorgesehen ist, wobei die mechanischen Aggregate der Abwasserentsorgung (11) über dem Boden an den Seitenwänden des Containers (19) angeordnet sind.

## Claims

1. A vehicle-washing installation having a washing arrangement (3), a waste-water disposal means (11) for washing fluid appliable in the washing arrangement (3) to a vehicle to be cleaned, and having a polishing arrangement (6) with at least one mechanical polishing element (7), **characterised in that** an application device (9) for a polishing agent is provided, this application device (9) being controllable such that the polishing agent is applied in concentrated form to the vehicle surface in a quantity targeted such that application of polishing agent takes place in a substantially drip-free manner and the polishing arrangement (6) fully distributes over the vehicle surface the polishing agent applied thereto and works it in.

2. A vehicle-washing installation according to Claim 1, **characterised in that** the application device (9) is in the form of a spray device.

3. A vehicle-washing installation according to Claim 1 or 2, **characterised in that** the waste-water disposal means (11) is arranged only in the region of the washing arrangement (3).

4. A vehicle-washing installation according to any one of the preceding Claims, **characterised in that** a drying arrangement (14) is arranged or connected between the washing arrangement (3) and the polishing arrangement (6).

5. A vehicle-washing installation according to any one of the preceding Claims, **characterised in that** an application device for osmosis water is provided.

6. A vehicle-washing installation according to any one of the preceding Claims, **characterised in that** the polishing arrangement (6) is arranged in one or more independent portals (10).

7. A vehicle-washing installation according to any one of the preceding Claims, **characterised in that** the vehicle-washing installation (1) is in the form of a conveyor-type car wash or a multiple-portal installation, in particular a double-portal installation (2).

8. A vehicle-washing installation according to Claim 7, **characterised in that** the polishing arrangement (6) is arranged in the second and possibly additional portals (10) in the case of a multiple-portal installation (2).

9. A vehicle-washing installation according to any one of the preceding Claims, **characterised in that** the polishing element (7) is in the form of a textile polishing brush (8).

10. A vehicle-washing installation according to any one of the preceding Claims, **characterised in that** the portals are in the form of suspension portals (16) movable on elevated (18) rails (17).

11. A vehicle-washing installation according to any one of the preceding Claims, **characterised in that** the vehicle-washing installation (1) is arranged in a transportable container (19), as a compact installation.

12. A vehicle-washing installation according to Claim 11, **characterised in that** a double bottom (15) is provided to receive the waste water, the mechanical assemblies of the waste-water disposal means (11) being arranged above the bottom, at the lateral walls of the container (19).

## Revendications

1. Installation de lavage de véhicules, comportant un dispositif de lavage (3), une évacuation d'eaux usées (11) pour un liquide de lavage à appliquer dans le dispositif de lavage (3) sur un véhicule à nettoyer, et un dispositif de polissage (6) comprenant au moins un élément de polissage mécanique (7), **caractérisée en ce qu'**il est prévu un dispositif d'application (9) pour un produit de polissage qui peut être commandé de telle sorte que le produit de polissage est appliqué sous forme concentrée sur la surface du véhicule dans une quantité ciblée telle que se produit une application de produit de polissage largement exempte de gouttes et que le dispositif de polissage (6) répartit complètement le produit de polissage appliqué sur la surface du véhicule et le fait pénétrer dans celle-ci.

2. Installation de lavage de véhicules selon la revendication 1, **caractérisée en ce que** le dispositif d'application (9) est réalisé sous forme de dispositif de pulvérisation.

3. Installation de lavage de véhicules selon l'une ou l'autre des revendications 1 et 2, **caractérisée en ce que** l'évacuation d'eaux usées (11) est agencée uniquement dans la zone du dispositif de lavage (3).

4. Installation de lavage de véhicules selon l'une quelconque des revendications précédentes, **caractérisée en ce qu'**un dispositif de séchage (14) est agencé ou branché entre le dispositif de lavage (3) et le dispositif de polissage (6).

5. Installation de lavage de véhicules selon l'une quelconque des revendications précédentes, **caractérisée en ce qu'**il est prévu un dispositif d'application pour de l'eau d'osmose.

6. Installation de lavage de véhicules selon l'une quelconque des revendications précédentes, **caractérisée en ce que** le dispositif de polissage (6) est agencé dans un ou plusieurs portiques autonomes (10).

7. Installation de lavage de véhicules selon l'une quelconque des revendications précédentes, **caractérisée en ce que** l'installation de lavage de véhicules (1) est réalisée sous forme de tunnel de lavage ou d'installation à portiques multiples, en particulier sous forme d'installation à portique double (2).

8. Installation de lavage de véhicules selon la revendication 7, **caractérisée en ce que** dans une installation à portiques multiples (2), le dispositif de polissage (6) est agencé dans le second portique et le cas échéant dans d'autres portiques (10).

9. Installation de lavage de véhicules selon l'une quelconque des revendications précédentes, **caractérisée en ce que** l'élément de polissage (7) est réalisé sous forme de brosse de polissage textile (8).

10. Installation de lavage de véhicules selon l'une quelconque des revendications précédentes, **caractérisée en ce que** les portiques sont réalisés sous forme de portiques suspendus (16) qui sont mobiles sur des rails (17) portés par des montants (18).

11. Installation de lavage de véhicules selon l'une quelconque des revendications précédentes, **caractérisée en ce que** l'installation de lavage de véhicules (1) est agencée sous forme d'installation compacte dans un container transportable (19).

12. Installation de lavage de véhicules selon revendication 11, **caractérisée en ce qu'**il est prévu un double fond (15) pour recevoir les eaux usées, les unités mécaniques de l'évacuation d'eaux usées (11) étant agencées au-dessus du fond contre les parois latérales du container (19).
